# EUROPEAN PATENT SPECIFICATION

(11) **EP 1 262 642 B1**
(45) Date of publication and mention of the grant of the patent: **22.08.2007**
(21) Application number: 02011981.4
(22) Date of filing: 29.05.2002
(51) Int. Cl.: F01N 3/08, F01N 3/28, B01D 53/94

(54) **Exhaust gas purifying system**
Abgasreinigungssystem
Système de purification de gaz d'échappement

(30) Priority: 31.05.2001 JP 2001165355; 10.05.2002 JP 2002135560
(43) Date of publication of application: 04.12.2002
(73) Proprietor: NISSAN MOTOR CO., LTD., Yokohama-shi Kanagawa-ken (JP)
(72) Inventor: Yamamoto, Shinji, Yokosuka-shi, Kanagawa-ken (JP); Takaya, Masahiro, Yokosuka-shi, Kanagawa-ken (JP)
(74) Representative: Grünecker, Kinkeldey, Stockmair & Schwanhäusser Anwaltssozietät

(56) References cited:
- EP-A- 0 895 803
- EP-A- 0 945 167
- US-A- 5 649 421
- US-A- 6 047 544

## Description

The present invention relates to an exhaust gas purifying system according to the preamble portions of claims 1 and 3. More particularly, the present invention relates to an exhaust gas purifying system capable of effectively purifying a large amount of hydrocarbons (HC) discharged from a vehicle at a low temperature at time of starting up an engine.

Heretofore, a three-way catalyst has widely been used in order to purify exhaust gas from an internal combustion engine of an automobile or the like. The three-way catalyst simultaneously performs oxidation of carbon monoxide (CO) and hydrocarbons (HC) and reduction of nitrogen oxides (NOx). However, at a low temperature at time of starting up the engine, the three-way catalyst is not activated because of the low temperature, and thus a large amount of cold HC discharged in this time cannot be purified.

Recent years, for the purpose of purifying such cold HC, an HC adsorbing/purifying catalyst (three-way catalyst having an HC adsorbing function) containing zeolite as a hydrocarbon adsorbent (HC adsorbent) and a purifying catalyst such as a three-way catalyst has been developed.

The HC adsorbing/purifying catalyst temporarily adsorbs and holds cold HC discharged in a low temperature range at the time of starting up the engine, in which the three-way catalyst is not activated. Then, the HC adsorbing/purifying catalyst gradually desorbs and even purifies the HC when the three-way catalyst is activated due to a temperature increase of exhaust gas.

As the catalyst that purifies the HC desorbed from the HC adsorbent, a catalyst mixing noble metals such as rhodium (Rh), platinum (Pt) and palladium (Pd) on the same layer and a catalyst of a multilayer structure including Rh and Pd layers have been proposed. Japanese Patent Laid-Open publication Hei 2-56247 (published in 1990) discloses an exhaust gas purifying catalyst including a second layer mainly containing noble metals such as Pt, Pd and Rh, which is formed on a first layer mainly containing zeolite.

Other three-way catalysts using HC adsorbents have been disclosed in Japanese Patent Laid-Open publications Hei 6-74019 (published in 1994), 7-144119 (published in 1995), 6-142457 (published in 1994), 5-59942 (published in 1993) and 7-102957 (published in 1995).

In addition, from US 6,047,544 there is known an engine exhaust gas purification system comprising a three-way catalyst and a hydrocarbon (HC) adsorbing/purifying catalyst, both being disposed in the exhaust gas passage. The HC adsorbing/purifying catalyst comprises a monolithic substrate, on which a first layer comprising a zeolite HC adsorbent is formed. A second layer, the catalyst layer with a three-way catalyst, is formed onto said first layer. The monolithic substrate of the HC adsorbing/purifying catalyst has a non-circular (elliptical) shape. The exhaust gas system might be provided with one three-way catalyst arranged upstream of two (or several) HC adsorbing/purifying catalyst units provided in the exhaust gas passage.

Moreover, US 5,649,421 refers to an exhaust emission control device comprising two HC converting catalytic converters subsequently arranged in the exhaust gas system. The second catalytic converter is split up in two independent portions. With respect to one specific embodiment disclosed, the outer dimensions of the honeycomb members of said two catalytic converters are given. Namely, the honeycomb member of the first catalytic converter has an outside diameter of 105 mm and a length of 140 mm. The honeycomb member of each of the two independent portions of the second converter has an outside diameter of 105 mm and a length of 81.2 mm.

However, in the case of using the conventional HC adsorbing/purifying catalyst, the cold HC that is adsorbed to the HC adsorbent at the time of starting up the engine may sometimes be desorbed before an exhaust gas temperature is increased. Such early desorbed HC is discharged in an unpurified state because of insufficient activation of the three-way catalyst.

Therefore, studies have been conducted on a method of desorbing and purifying adsorbed HC by a three-way catalyst after the three-way catalyst is sufficiently activated by changing exhaust passages, a method of activating a three-way catalyst early by use of an electric heater, a method of quickening an activation start of a three-way catalyst by introducing external air, and the like. However, these methods are costly because of complex system configurations, and efficiency of purifying the cold HC cannot be sufficiently increased.

An objective of the present invention is to provide a simple exhaust gas purifying system as indicated above capable of improving the efficiency of purifying the cold HC.

This objective is solved by an exhaust gas purifying system having the features of either of claims 1 and 3.

Preferred embodiments are laid down in the respective dependent claims.

In the following, the present invention is explained in greater detail with respect to several embodiments thereof in conjunction with the accompanying drawings and tables, wherein:
FIGS. 1A and 1B are views, each showing a basic configuration of an exhaust gas purifying system according to an embodiment;
FIG 2 is a view showing an HC adsorbing/purifying catalyst and a cell of the embodiment respectively in perspective and in expanded section,
FIGS. 3 and 4 are perspective views, each showing another HC adsorbing/purifying catalyst of the embodiment,
FIG 5 is a configuration view of the exhaust gas purifying system according to examples,
Tables 1 to 4 showing conditions of catalysts used for the exhaust gas purifying system according to the examples
Tables 5 and 6 showing characteristics of the exhaust gas purifying system according to the examples and
FIGS. 6A and 6B are graphs showing the relationships between HC purification rate and L/d, and HC purification rate and L/A respectively.

Next, description will be made for an exhaust gas purifying system according to an embodiment. In the present specification, "%" represents a mass percentage unless otherwise specified.

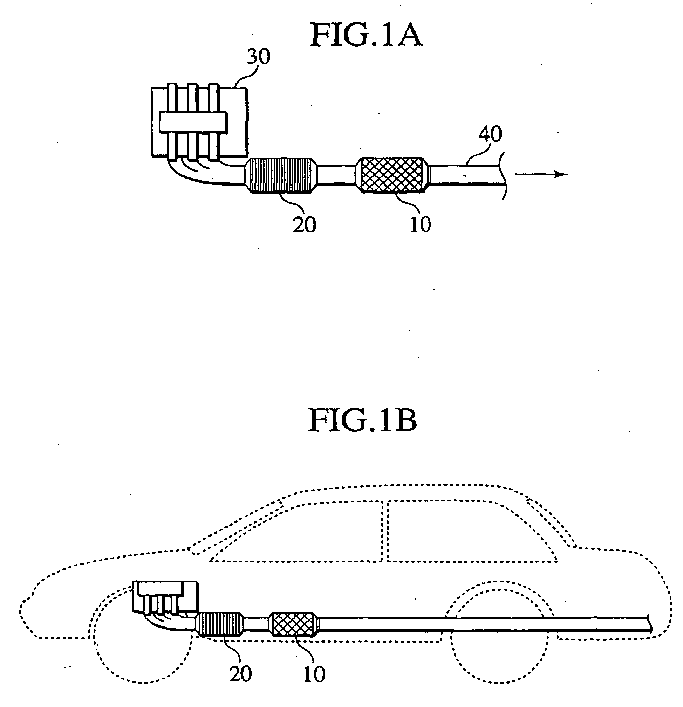

As shown in FIG. 1A, the exhaust gas purifying system of this embodiment includes at least an HC adsorbing/purifying catalyst 10 and a three-way catalyst 20, and the system is mounted on a vehicle as shown in FIG. 1B. In this exhaust gas purifying system, the three-way catalyst 20 is disposed upstream on a passage 40 for exhaust gas discharged from an internal combustion engine 30, and the HC adsorbing/purifying catalyst 10 is disposed downstream thereon.

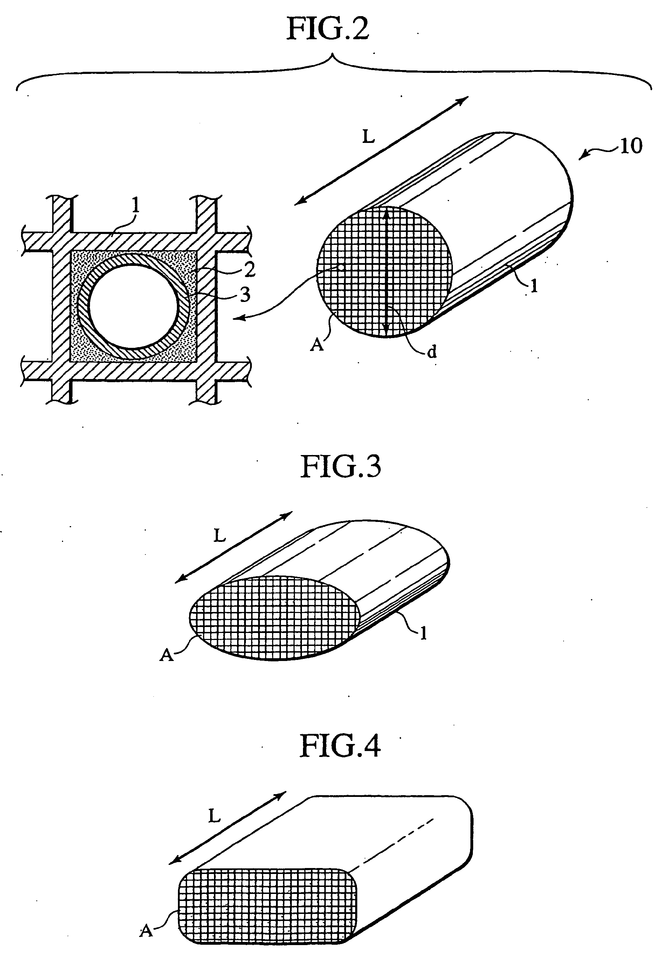

As shown in FIG2, the HC adsorbing/purifying catalyst 10 includes a monolithic carrier 1 having a plurality of cells, and includes HC adsorbent layers 2 and purifying catalyst layers 3, which are formed on the monolithic carrier 1.

A large amount of cold HC are discharged from the internal combustion engine 30 in a low temperature range at time of starting up the engine. However, these cold HC are adsorbed to the HC adsorbent layers 2 during passage through the cells of the HC adsorbing/purifying catalyst 10. When the purifying catalyst layers 3 are activated, the purifying catalyst layers 3 purify HC desorbed from the HC adsorbent layers 2.

There are no particular limitations for a sectional shape of the monolithic carrier 1 used for the HC adsorbing/purifying catalyst 10. A circular section shown in FIG 2, an elliptical section shown in FIG 3 or a flat rectangular section shown in FIG. 4 may be used.

When the monolithic carrier 1 has a nearly circular section as shown in FIG 2, the monolithic carrier 1 has a diameter (d) of a section and a length (L) set in the relation represented by 0.7≤L/d, preferably 2.0≤L/d≤16.0. It is more preferable to set in 4.0≤L/d≤14.0. Note that, the diameter (d) is that of the section perpendicular to an exhaust gas flowing direction, and the length (L) is that in the exhaust gas flowing direction.

When the monolithic carrier 1 has other sectional shape than the circular shape as shown in FIG. 3 or 4, the monolithic carrier 1 has a sectional area (A) and a length (L) set in a relation represented by 0.01≤L/A, preferably 0.035≤L/A≤0.3. It is more preferable to set in 0.07≤L/A≤0.25.

Generally, since no extra space is provided in the vehicle, a capacity of a catalyst mounted on the vehicle is limited. The monolithic carrier 1 of the HC adsorbing/purifying catalyst 10 of this embodiment has the relationship between the sectional diameter (d) and the length (L) or between the sectional area (A) and the length (L), which is set to satisfy the above-described condition. Thus, the length (L) is longer as compared with that of the conventional HC adsorbing/purifying catalyst of the same capacity.

HC in the exhaust gas moves, being repeatedly adsorbed and desorbed in passage through each cell of the monolithic carrier 1. Accordingly, as the length (L) of the monolithic carrier 1 is longer, a frequency of adsorption and desorption is increased, thus making it possible to increase HC purification rate.

As the length (L) of the monolithic carrier 1 is longer, a temperature gradient is generated in a longitudinal direction of the monolithic carrier 1, thus lowering a temperature in an outlet of the monolithic carrier 1. Thus, since a temperature increase of the HC adsorbing/purifying catalyst 10 becomes gentler as compared with that in the conventional case, the desorption of adsorbed HC is delayed, and the HC purification rate is improved.

In the HC adsorbing/purifying catalyst 10, there are no limitations for disposition of the HC adsorbent and purifying catalyst layers 2 and 3. Preferably, however, as shown in FIG 2, each purifying catalyst layer 3 is formed on the HC adsorbent layer 2. Since the purifying catalyst layer 3 is brought into direct contact with the exhaust gas, the purifying catalyst layer 3 is efficiently heated by heat of the exhaust gas. Therefore, the purifying catalyst layer 3 can be activated early, thus making it possible to improve the HC purification rate.

It is possible to delay the HC desorption if L/d is equal to/higher than 0.70. However, the delaying of the HC desorption can be assured more if L/d is higher than or equal to 2.0. On the other hand, a longer length L makes it difficult to increase a temperature of the entire purifying catalyst layer 3. However, if L/d is lower than or equal to 16.0, delayed starting of activation of the purifying catalyst layer 3 can be prevented. Accordingly, when L and d satisfy the relationship represented by 2.0≤L/d≤16.0, preferably 4.0≤L/d≤4.0, the desorption of the adsorbed HC can be delayed without any delayed starting of activation of the purifying catalyst layer 3. Therefore, it is possible to effectively increase the HC purification rate.

When the sectional area (A) and the length (L) of the monolithic carrier satisfy the relationship represented by 0.01≤L/A, an effect similar to that when L/d is higher than or equal to 0.70 is obtained. When the sectional area (A) and the length (L) of the monolithic carrier satisfy the relationship represented by L/A≤0.3, an effect similar to that when L/d is lower than or equal to 16.0 is obtained. To further assure an improvement in the HC purification rate, L and A are set so as to satisfy the relation represented by 0.035≤L/A≤0.3, preferably 0.070≤L/A≤0.25.

In the adsorbing/purifying catalyst according to this embodiment, another HC adsorbing/purifying catalyst may be added on the exhaust gas passage. If a plurality of the HC adsorbing/purifying catalysts are disposed on the exhaust gas passage, then a sum (Σd) of the sectional diameters and a sum (ΣL) of the lengths of the monolithic carriers of the HC adsorbing/purifying catalysts should preferably satisfy the relationship represented by 0.5≤(ΣL)/(Σd). If (ΣL)/(Σd) is higher than or equal to 0.5, then a sufficient HC desorption delaying effect can be obtained.

In addition, if the plurality of HC adsorbing/purifying catalysts are longitudinally disposed, a sum (ΣA) of sectional areas and the sum (ΣL) of lengths of the monolithic carriers should preferably satisfy the relationship represented by 0.05≤(ΣL)/(ΣA), and accordingly, much higher HC purification rate can be realized.

More specifically, if (ΣL)/(ΣA) is higher than or equal to 0.5, then an effect similar to the above can be obtained.

The three-way catalyst 20 includes a function of simultaneously performing oxidation of carbon monoxide (CO) and hydrocarbons (HC) and reduction of nitrogen oxides (NOx). More preferably, the three-way catalyst 20 of this embodiment has a feature that controls an amount of adsorbed hydrocarbons of the HC adsorbing/purifying catalyst to be lower than a saturated adsorption amount.

Specifically, in order to provide the feature to the three-way catalyst 20, it is preferable to accelerate an activation thereof by the following means : 1) thinning the wall of the monolith carrier of the three- way catalyst 20 to reduce a heat capacity thereof, 2) enlarging a surface area contacting the exhaust gas, 3) controlling an amount of noble metals contained in the three-way catalyst 20, 4) controlling the combustion state in an engine to provide a suitable balance of various gases including an oxygen and HC, and 5) accelerating the time for stabilizing the combustion state in the engine.

When the amount of HC adsorbed to the HC adsorbing/purifying catalyst 10 exceeds the saturated adsorption amount, unpurified HC are directly discharged outside. However, if the amount of HC is controlled not to exceed the saturated adsorption amount by the three-way catalyst 20, the HC adsorbing/purifying catalyst 10 can adsorb the unpurified HC in the exhaust gas again.

Cold HC in the exhaust gas are repeatedly adsorbed and desorbed when the cold HC pass through the cells of the HC adsorbing/purifying catalyst 10. If the HC adsorption amount of the HC adsorbent layers 2 of the HC adsorbing/purifying catalyst 10 does not exceed the saturated adsorption amount, the unpurified HC desorbed from each HC adsorbent layer 2 can be adsorbed again to different positions of the HC adsorbent layer 2 in passage through the cell. Thus, an HC holding force of the catalyst as a whole is increased, and the HC desorption is delayed.

When the temperature of the three-way catalyst 20 disposed upstream is increased and thus the three-way catalyst 20 is activated, oxygen in exhaust gas is employed in a reaction caused by the three-way catalyst 20. Thus, concentration of oxygen that flows into the HC adsorbing/purifying catalyst 10 disposed downstream decreases considerably. Accordingly, oxygen shortage occurs in the purifying catalyst layer 3 for purifying the HC desorbed from the HC adsorption layer 2. However, if the adsorbed HC amount is set lower than or equal to 70%, then the oxygen shortage can be mitigated, thus making it possible to further improve the HC purification rate.

Next, description is made for components of the above-described HC adsorbing/purifying catalyst.

When zeolite is used as an HC adsorbent for the HC adsorbent layer 2, adsorptivity for cold HC is affected by a correlation between HC species composition in exhaust gas and pore size of the zeolite. Thus, it is necessary to select and use zeolite having an optimal pore size distribution and a skeletal structure.

Generally, an MFI type is used. Other zeolites (e.g., USY) having large pore size may be singly used, or pore size distribution of zeolite may be controlled by mixing such plural kinds of zeolites. However, after a long-time use, because of differences in distortion of pores and adsorption/desorption characteristics depending on types of zeolites, adsorption of the HC species in the exhaust gas will be insufficient.

As an HC adsorbent used for the HC adsorbent layer 2 of this embodiment, H type β-zeolite having a Si/2A1 ratio set in a range of 10 to 1000 is available. Since this H type β-zeolite has a wide pore size distribution and high resistance to heat, it provides high HC adsorption efficiency, and high resistance to heat can be obtained.

In addition, as the HC adsorbent, preferably, the H type β-zeolite should be used in combination with one selected from MFI, a Y type zeolite, USY, mordenite and ferrierite or an optional mixture thereof. By mixing plural types of zeolites, the pore size distribution can be expanded. Thus, it is possible to further improve the HC adsorption efficiency of the HC adsorbent layer 2.

For the HC adsorbent layer 2, besides the above zeolite-series materials, one selected from the group consisting of palladium (Pd), magnesium (Mg), calcium (Ca), strontium (Sr), barium (Ba), silver (Ag), yttrium (Y), lanthanum (La), cerium (Ce), neodymium (Nd), phosphorus (P), boron (B) and zirconium (Zr) and a mixture thereof can be added. Since the adsorptivity and heat resistance of zeolite can be accordingly enhanced more, it is possible to delay the desorption of adsorbed HC.

The HC adsorbent layer may also be formed by using the zeolite as a main component, and by adding one selected from Pt, Rh and Pd or a mixture thereof, a zirconium oxide containing 1 to 40 mol%, in metal, of one selected from Ce, Nd, praseodymium (Pr) and La or a mixture thereof, and alumina. Accordingly, since the purifying catalyst components are added to the HC adsorbent layer 2, it is possible to improve the HC purification rate of the upper purifying catalyst layer 3.

Meanwhile, for the purifying catalyst layer 3 of the HC adsorbing/purifying catalyst 10, noble metal selected from Pt, Rh and Pd or a mixture thereof can be used. Further, it is possible to add alumina containing 1 to 10 mol%, in metal, of one selected from Ce, Zr and La or a mixture thereof, and 1 to 50 mol%, in metal, of a cerium oxide containing one selected from Zr, Nd, Pr and La or a mixture thereof.

The three-way catalyst of the purifying catalyst layer 3 effectively functions in a stoichiometric air-fuel ratio (Air/Fuel=14.6), oxidizes HC and CO, and reduces NOx. However, since atmosphere of the purifying catalyst layer 3 becomes short of oxygen when HC desorbed from the HC adsorbent layer 2 is purified, well-balanced treatment is impossible for HC, carbon monoxide (CO) and nitrogen oxides (NOx), and consequently the adsorbed HC cannot be sufficiently purified. On the other hand, when a cerium oxide is added to the purifying catalyst layer 3, since the cerium oxides discharges oxygen in desorption of the adsorbed HC, the purification rate of the purifying catalyst layer 3 can be improved.

In addition, a zirconium oxide containing 1 to 40 mol%, in metal, of any of Ce and La or a mixture thereof can be added to the purifying catalyst layer 3. Accordingly, the HC purification rate of the purifying catalyst layer 3 can be further improved.

Meanwhile, when the purifying catalyst layer 3 is formed by using, in combination, noble metal such as Pt, Rh and Pd, and alkaline metal and/or alkaline earth metal, heat resistance is enhanced. Accordingly, HC purification can be improved.

There are no particular limitations for materials of the above-described monolithic carrier 1, and conventionally known materials can be used. Specifically, cordierite, metal and silicon carbides can be used.

On the other hand, any components that exhibit three-way purifying performance can be used for the three-way catalyst 20. For example, platinum, palladium, rhodium, alumina and other heat-resistant inorganic oxides can be used.

As in the case of the HC adsorbing/purifying catalyst 10, various monolithic carriers can be used for the three-way catalyst 20, and there are no limitations to shapes or dimensions thereof. Another three-way catalyst may be disposed downstream of the HC adsorbing/purifying catalyst 10 on the exhaust gas passage.

Hereinafter, description is made for examples of the exhaust gas purifying system of this embodiment.

### EXAMPLES

### Catalyst 1: HC adsorbing/purifying catalyst

### (Preparation of "catalyst-a")

A slurry solution was obtained by pouring 2125 g of β-zeolite powder (H type, Si/2A1=25), 1875 g of silica sol (solid part 20%) and 3000 g of pure water into a magnetic ball mill, and mixing and milling these. This slurry solution was coated on a monolithic carrier (200cells/10mil, diameter 99.2mm x length 1229.4mm, catalyst capacity 1.0 L), dried after removing extra slurry in the cell by an air flow, and baked at 400°C for an hour. After the baking, the coating step was repeated until an amount of coating reached 250 g/L, and thus a "catalyst-a" was obtained.

### (Preparation of "catalyst-b")

Alumina powder (A1 97 mol%) containing 3 mol% of Ce was impregnated with a palladium nitrate aqueous solution, or the palladium nitrate aqueous solution was sprayed while the alumina power was being stirred at high speed. After the alumina powder was dried at 150 °C for 24 hours, the alumina powder was baked at 400 °C for an hour, and then at 600 °C for an hour, and Pd supported alumina powder ("powder a") was obtained. Pd concentration of this "powder a" was 4.0%.

Cerium oxide powder (67 mol% of Ce) containing 1 mol% of La, and 32 mol% of Zr was impregnated with the palladium nitrate aqueous solution, or the palladium nitrate aqueous solution was sprayed while the cerium oxide power was being stirred at high speed. After the cerium oxide power was dried at 150 °C for 24 hours, the cerium oxide powder was baked at 400 °C for an hour, and then at 600 °C for an hour, and Pd supported cerium oxide powder ("powder b") was obtained. Pd concentration of this "powder b" was 2.0%.

A slurry solution was obtained by pouring 314 g of the Pd supported alumina power ("powder a"), 314 g of the Pd supported cerium oxide powder ("powder b"), 320 g of nitric acid alumina sol (32g, in Al₂O₃, of sol obtained by adding nitric acid of 10% to boehmite alumina of 10%), 51.5g of barium carbonate (40 g of BaO) and 2000 g of pure water into a magnetic ball mill, and mixing and milling these. This slurry solution was coated on the "catalyst-a", dried after removing extra slurry in the cell by an air flow, and baked at 400 °C for an hour. Thus, a "catalyst-b" of a coated layer weight of 70 g/L was obtained.

### (Preparation of HC adsorbing/purifying catalyst)

Alumina powder (A1 97 mol%) containing 3 mol% of Zr was impregnated with a rhodium nitrate aqueous solution, or the palladium nitrate aqueous solution was sprayed while the alumina power was being stirred at high speed. After the alumina powder was dried at 150 °C for 24 hours, the alumina powder was baked at 400 °C for an hour, and then at 600 °C for an hour, and Rh supported alumina powder ("powder c") was obtained. Rh concentration of this "powder c" was 2.0%.

Alumina powder (A1 97 mol%) containing 3 mol% of Ce was impregnated with a dinitrodiammine platinum aqueous solution, or the dinitrodiammine platinum aqueous solution was sprayed while the alumina power was being stirred at high speed. After the alumina powder was dried at 150 °C for 24 hours, the alumina powder was baked at 400 °C for an hour, and then at 600 °C for an hour, and Pt supported alumina powder ("powder d") was obtained. Pt concentration of this powder d was 4.0%.

A slurry solution was obtained by pouring 118 g of the Rh supported alumina power ("powder c"), 177 g of the Pt supported alumina powder ("powder d"), 175 g of zirconium oxide powder containing 1 mol% of La and 20 mol% of Ce and 300 g of nitric acid alumina sol into a magnetic ball mill, and mixing and milling these. This slurry solution was coated on the "catalyst-b", dried after removing extra slurry in the cell by an air flow, baked at 400°C for an hour, and coated by a coated layer weight of 50 g/L. Thus, a "catalyst 1" (HC adsorbing/purifying catalyst) was obtained.

Noble metal supported amounts of the catalyst thus obtained were 0.71 g/L for Pt, 1.88 g/L for Pd, and 0.24 g/L for Rh. Tables 1 and 2 show specifications of the "catalyst 1" thus obtained.

### Catalyst 22: Three - way catalyst

### (Preparation of "catalyst-e")

A slurry solution was obtained by pouring 432 g of the Pd supported alumina power ("powder a"), 314 g of the Pd supported cerium oxide powder ("powder b"), 140 g of nitric acid alumina sol (32g, in Al₂O₃, of sol obtained by adding nitric acid of 10% to boehmite alumina of 10%), 51.5 g of barium carbonate (40 g of BaO), and 2000 g of pure water into a magnetic ball mill, and mixing and milling these. This slurry solution was coated on a monolithic carrier (1200 cells/ 2 mil, 0.5L), dried after removing extra slurry in the cell by an air flow, and baked at 400°C for an hour. Then, the slurry solution of a coated layer weight of 80 g/L was coated, and thus a "catalyst-e" was obtained.

A slurry solution was obtained by pouring 118 g of the Rh supported alumina power ("powder c"), 177 g of the Pt supported alumina powder ("powder d"), 175 g of zirconium oxide powder containing 1 mol% of La, and 20 mol% of Ce, and 300 g of nitric acid alumina sol into a magnetic ball mill, and mixing and milling these. This slurry solution was coated on the "catalyst-e", dried after removing extra slurry in the cell by an air flow, and baked at 400 °C for an hour. Then, the slurry solution of a coated layer weight of 50 g/L was coated, and thus a "catalyst 22" was obtained.

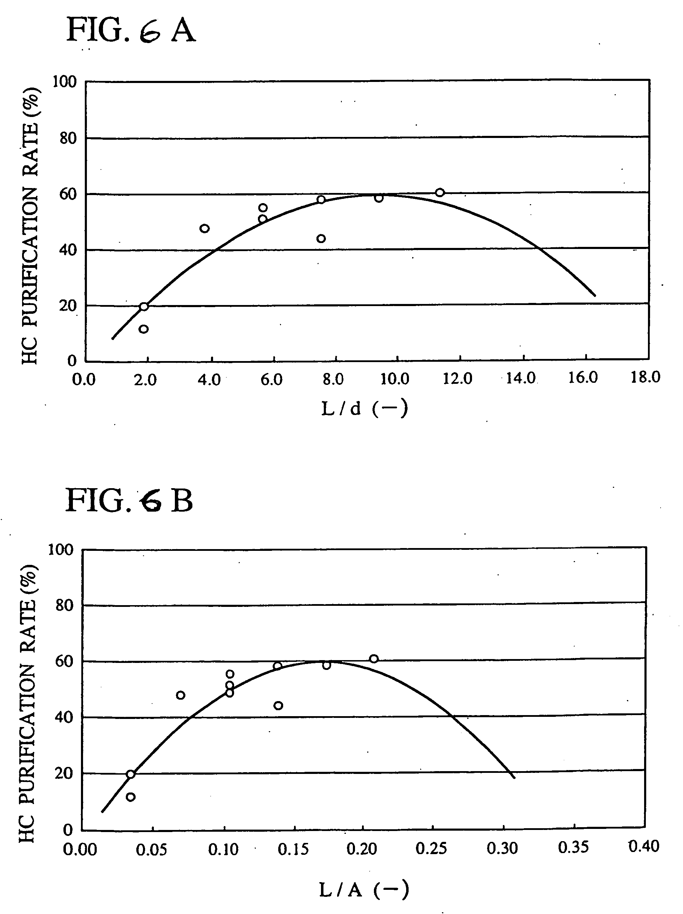

Noble metal supported amounts of the catalyst thus obtained were 0.71 g/L for Pt, 2.36 g/L for Pd and 0.24g/L for Rh. Tables 1 and 2 of FIGS. 6 and 7 show specifications of the "catalyst 22" thus obtained.

### Catalysts 2 to 20: Other HC adsorbing/purifying catalysts

By using a producing method similar to that of the "catalysts 1", "catalysts 2 to 20" (HC adsorbing/purifying catalysts) of specifications shown in Tables 1 and 2 of FIGS. 6 and 7 were prepared.

### Catalysts 21 : Three-way catalyst

As three-way catalyst, catalyst 21 of specifications shown in Tables 1 and 2 of FIGS. 6 and 7 was prepared according to a general method.

### Exhaust gas purifying system

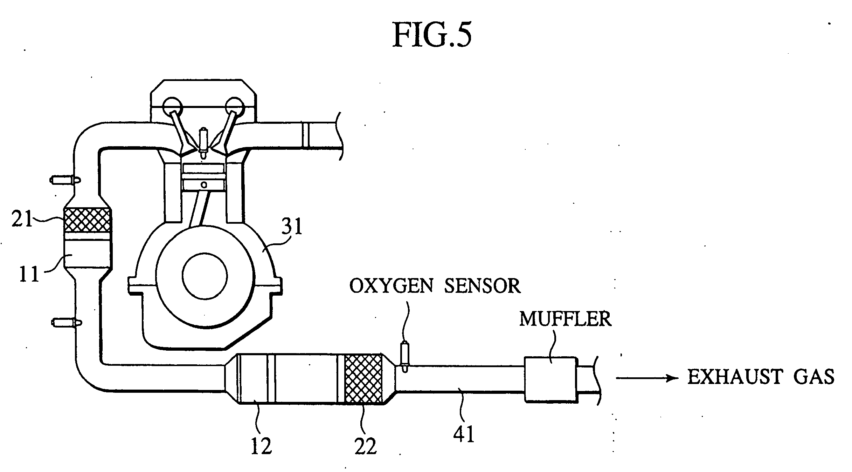

An exhaust gas purifying catalyst system shown in FIG. 5 was manufactured by using the HC adsorbing/purifying catalysts (catalysts 1 to 20) and the three-way catalysts (catalysts 21 and 22), which were prepared under the above-described conditions. As shown in FIG. 5, in the exhaust gas purifying catalyst system of the example, first and second three-way catalysts 21 and 22 and first and second HC adsorbing/purifying catalysts 11 and 12 were disposed on a passage 41 of exhaust gas from an engine 31. One or both of the first and second HC adsorbing/purifying catalysts 11 and 12 were used. According to conditions shown in Tables 3 and 4 exhaust gas purifying catalyst systems of examples 1 to 39 and comparative examples 1 to 4 were manufactured.

### [Performance evaluation]

Performance evaluation was carried out for the exhaust gas purifying system of each of the examples and the comparative examples under the following conditions. Tables 5 and 6 show obtained results. The example 17 had a best result in terms of both cold HC adsorbing performance and desorbed HC purifying performance, and cost.

Also, graphs of FIGS. 6A and 6B show the relationships between HC purification rate and L/d, and HC purification rate and L/A respectively. According to FIG 6A, more than 20 % of HC purification can be obtained when L/d satisfies the relationship represented by 2.0 ≤ L/d ≤ 16.0, and more than 40 % of HC purification can be obtained when L/d satisfies the relationship represented by 4.0 ≤ L/d ≤ 14.0. According to FIG. 6B, more than 20 % of HC purification can be obtained when L/A satisfies the relationship represented by 0.035 ≤ L/A ≤0.3, and more than 40 % of HC purification can be obtained when L/A satisfies the relationship represented by 0.07 ≤ L/d ≤ 0.25.

**(Durability condition)**

| | |
|---|---|
| Engine displacement | 3000 cc |
| Fuel | gasoline (Nisseki Dash) |
| Catalyst inlet gas temperature | 650°C |
| Test period | 100 hours |

**(Vehicle performance test)**

| | |
|---|---|
| Engine displacement | In-line four-cylinder 2.0 L engine |
| | (manufactured by Nissan Motor Co., Ltd.) |
| Method of evaluation. | A-bag of LA4-CH of North America mode exhaust gas testing method |

As described above, according to the teaching of the present embodimentsproper adjustment is made for the shape of the monolithic carrier of the HC adsorbing/purifying catalyst disposed downstream of the catalyst having the three-way catalytic function, thus making it possible to provide an exhaust gas purifying system offering excellent purification rate of cold HC.

**Table 1**

| Catalyst No. | β-zeolite | | Other zeolite | Si/2Al | Dopant | Amount (g/L) | Amount of HC adsorbent layer (g/L) | Pt (g/L) | Pd (g/L) | Rh (g/L) | BaO (g/L) |
|---|---|---|---|---|---|---|---|---|---|---|---|
| | Si/2Al | Amount (g/L) | | | | | | | | | |
| 1 | 25 | 213 | - | | - | 0 | 250 | 0.71 | 1.88 | 0.24 | 4.0 |
| 2 | 40 | 213 | - | | - | 0 | 250 | 0.71 | 1.88 | 0.24 | 4.0 |
| 3 | 75 | 213 | - | | - | 0 | 250 | 0.71 | 1.88 | 0.24 | 4.0 |
| 4 | 150 | 213 | - | | - | 0 | 250 | 0.71 | 1.88 | 0.24 | 4.0 |
| 5 | 300 | 213 | - | | - | 0 | 250 | 0.71 | 1.88 | 0.24 | 4.0 |
| 6 | 25 | 213 | - | | - | 0 | 250 | 0.71 | 1.88 | 0.24 | 4.0 |
| 7 | 25 | 213 | - | | - | 0 | 250 | 0.71. | 1.88 | 0.24 | 4.0 |
| 8 | 25 | 213 | - | | - | 0 | 250 | 0.71 | 1.88 | 0.24 | 4.0 |
| 9 | 25 | 200 | Mordenite | 30 | - | 13 | 250 | 0.71 | 1.88 | 0.24 | 4.0 |
| 10 | 25 | 200 | MFI | 30 | - | 13 | 250 | 0.71 | 1.88 | 0.24 | 4.0 |
| 11 | 25 | 200 | USY | 25 | - | 13 | 250 | 0.71 | 1.88 | 0.24 | 4.0 |
| 12 | 25 | 187 | Y,MFI | 10, 30 | - | 26 | 250 | 0.71 | 1.88 | 0.24 | 4.0 |
| 13 | 25 | 200 | Ferrierite | 70 | - | 13 | 250 | 0.71 | 1.88 | 0.24 | 4.0 |
| 14 | 25 | 200 | Mordenite | 30 | Ca0.01%,Y0.01%,Zr0.1% | 13 | 250 | 0.71 | 1.88 | 0.24 | 4.0 |
| 15 | 25 | 200 | MFI | 30 | Ba0.01%, Nd0.01%, B0.01% | 13 | 250 | 0.71 | 1.88 | 0.24 | 4.0 |
| 16 | 25 | 200 | USY | 25 | Sr0.01%, La0.01% | 13 | 250 | 0.71 | 1.88 | 0.24 | 4.0 |
| 17 | 25 | 187 | Y, MFI | 10,30 | Y:Mg0.01%, Ca0.01%, P0.1%, MFI: Ca0.01%, Nd0.01%, B0.01% | 26 | 250 | 0.71 | 1.88 | 0.24 | 4.0 |
| 18 | 25 | 200 | Ferrierite | 70 | Ag0.1%, P0.1 % | 13 | 50 | 0.71 | 1.88 | 0.24 | 4.0 |
| 19 | 25 | 213 | - | | - | 0 | 250 | 0.71 | 1.88 | 0.24 | 4.0 |
| 20 | 25 | 213 | - | | - | 0 | 250 | 0.71 | 1.88 | 0.24 | 4.0 |
| 21 | - | - | - | | - | - | - | - | 1.18 | 0.24 | - |
| 22 | - | - | - | | - | - | - | 0.71 | 2.36 | 0.24 | 4.0 |

**Table 2**

| Catalyst No. | Numbers of cells (cpsi) | Thickness of wall (mill) | Diameter of monolithic carrier : d (mm) | Area of monolithic carrier cross section : A (mm2) | Length of monolithic carrier: L (mm) | Volume of catalyst (cm3) |
|---|---|---|---|---|---|---|
| 1 | 200 | 10 | 99.2 | 7728.8 | 64.7 | 500 |
| 2 | 200 | 10 | 101.6 | 8107.3 | 61.7 | 500 |
| 3 | 200 | 10 | 110.0 | 9503.3 | 52.6 | 500 |
| 4 | 200 | 10 | 69.6 | 3804.6 | 131.4 | 500 |
| 5 | 200 | 10 | 99.2 | 7728.8 | 129.4 | 1000 |
| 6 | 200 | 10 | 101.6 | 8107.3 | 123.4 | 1000 |
| 7 | 200 | 10 | 110.0 | 9503.3 | 105.2 | 1000 |
| 8 | 200 | 10 | 69.6 | 3804.6 | 262.8 | 1000 |
| 9 | 200 | 10 | 99.2 | 7728.8 | 129.4 | 1000 |
| 10 | 200 | 10 | 101.6 | 8107.3 | 123.4 | 1000 |
| 11 | 200 | 10 | 110.0 | 9503.3 | 105.2 | 1000 |
| 12 | 200 | 10 | 69.6 | 3804.6 | 262.8 | 1000 |
| 13 | 200 | 10 | 99.2 | 7728.8 | 129.4 | 1000 |
| 14 | 200 | 10 | 101.6 | 8107.3 | 123.4 | 1000 |
| 15 | 200 | 10 | 110.0 | 9503.3 | 105.2 | 1000 |
| 16 | 200 | 10 | 69.6 | 3804.6 | 262.8 | 1000 |
| 17 | 200 | 10 | 69.6 | 3804.6 | 262.8 | 1000 |
| 18 | 200 | 10 | 69.6 | 69.6 | 262.8 | 1000 |
| 19 | 200 | 10 | 143*98 ¹⁾ | 11006.6 | 90.8 | 1000 |
| 20 | 200 | 10 | 169.7*80.8¹⁾ | 10769.2 | 92.8 | 1000 |
| 21 | 900 | 2 | - | - | - | 500 |
| 22 | 1200 | 2 | - | - | - | 500 |

| | | | | | | |
|---|---|---|---|---|---|---|
| 1) elliptical shape | | | | | | |

**Table 3**

| Examples | 1^{st} 3-way catalyst : 21 | 1^{st} HC adsorbing/purifying catalyst : 11 | | | 2^{nd} HC adsorbing/purifying catalyst : 12 | | | 2^{nd} 3-way catalyst : 22 | Total HC adsorbing/purifying catalysts | |
|---|---|---|---|---|---|---|---|---|---|---|
| | Catalyst No. | Catalyst No. | L/d (-) | L/A (-) | Catalyst No. | L/d (-) | L/A (-) | Catalyst No. | ∑(L)/∑(d) (-) | ∑(L)/∑(A) (-) |
| 1 | 22 | 4 | 1.89 | 0.035 | - | - | - | 21 | 1.89 | 0.35 |
| 2 | 22 | - | - | - | 4 | 1.89 | 0.35 | 21 | 1.89 | 0.35 |
| 3 | 22 | - | - | - | 5 | 1.30 | 0.17 | 21 | 1.89 | 0.17 |
| 4 | 22 | - | - | - | 6 | 1.21 | 0.015 | 21 | 1.21 | 0.015 |
| 5 | 22 | - | - | - | 7 | 0.96 | 0.001 | 21 | 0.96 | 0.001 |
| 6 | 22 | - | - | - | 8 | 3.78 | 0.069 | 21 | 3.78 | 0.069 |
| 7 | 22 | 4 | 1.89 | 0.035 | 4 | 1.89 | 0.035 | 21 | 3.78 | 0.070 |
| 8 | 22 | 1 | 0.65 | 0.008 | 1 | 0.65 | 0.008 | 21 | 1.30 | 0.016 |
| 9 | 22 | 2 | 0.61 | 0.008 | 2 | 0.61 | 0.008 | 21 | 1.22 | 0.016 |
| 10 | 22 | 3 | 0.48 | 0.006 | 3 | 0.48 | 0.006 | 21 | 0.96 | 0.012 |
| 11 | 22 | 8 | 3.78 | 0.069 | 4 | 1.89 | 0.035 | 21 | 5.67 | 0.104 |
| 12 | 22 | - | - | - | 4+8 | 5.66 | 0.104 | 21 | 5.66 | 0.104 |
| 13 | 22 | - | - | - | 8+8 | 7.55 | 0.138 | 21 | 7.55 | 0.138 |
| 14 | 22 | - | - | - | 4+8+8 | 9.44 | 0.173 | 21 | 9.44 | 0.173 |
| 15 | 22 | 4 | 1.89 | 0.035 | 8+8 | 7.55 | 0.138 | 21 | 9.44 | 0.173 |
| 16 | 22 | 8 | 3.78 | 0.069 | 8 | 3.78 | 0.069 | 21 | 7.56 | 0.138 |
| 17 | 22 | 8 | 3.78 | 0.069 | 8+8 | 7.55 | 0.138 | 21 | 11.33 | 0.207 |
| 18 | 22 | - | - | - | 3+7 | 1.43 | 0.017 | 21 | 1.43 | 0.017 |
| 19 | 22 | - | - | - | 7+7 | 1.91 | 0.022 | 21 | 1.91 | 0.022 |
| 20 | 22 | - | - | - | 3+7+7 | 2.39 | 0.028 | 21 | 2.39 | 0.028 |

**Table 4**

| Examples | 1^{st} 3-way catalyst : 21 | 1^{st} HC adsorbing/purifying catalyst : 11 | | | 2^{nd} HC absorbing/purifying catalyst : 12 | | | 2^{nd} 3-way catalyst : 22 | Total HC adsorbing/purifying catalysts | |
|---|---|---|---|---|---|---|---|---|---|---|
| | Catalyst No. | Catalyst No. | L/d (-) | L/A (-) | Catalyst No. | L/d (-) | L/A (-) | Catalyst No. | Σ(L)/Σ(d) (-) | Σ(L)/Σ(A) (-) |
| 21 | 22 | 3 | 0.48 | 0.006 | 6 | 1.21 | 0.015 | 21 | 1.69 | 0.021 |
| 22 | 22 | 6 | 1.21 | 0.015 | 6 | 1.21 | 0.015 | 21 | 2.42 | 0.030 |
| 23 | 22 | 6 | 1.21 | 0.015 | 3+7 | 1.43 | 0.017 | 21 | 2.64 | 0.032 |
| 24 | 22 | 1 | 0.65 | 0.008 | 9 | 1.30 | 0.017 | 21 | 1.95 | 0.025 |
| 25 | 22 | 2 | 0.61 | 0.008 | 10 | 1.21 | 0.015 | 21 | 1.82 | 0.023 |
| 26 | 22 | 3 | 0.48 | 0.006 | 11 | 0.96 | 0.011 | 21 | 1.44 | 0.017 |
| 27 | 22 | 4 | 1.89 | 0.035 | 12 | 3.78 | 0.069 | 21 | 5.67 | 0.104 |
| 28 | 22 | 1 | 0.65 | 0.008 | 13 | 1.30 | 0.017 | 21 | 1.95 | 0.025 |
| 29 | 22 | 2 | 0.61 | 0.008 | 14 | 1.21 | 0.015 | 21 | 1.82 | 0.023 |
| 30 | 22 | 3 | 0.48 | 0.006 | 15 | 0.96 | 0.011 | 21 | 1.44 | 0.017 |
| 31 | 22 | 4 | 1.89 | 0.035 | 16 | 3.78 | 0.069 | 21 | 5.67 | 0.104 |
| 32 | 22 | 4 | 1.89 | 0.035 | 17 | 3.78 | 0.069 | 21 | 5.67 | 0.104 |
| 33 | 22 | 4 | 1.89 | 0.035 | 18 | 3.78 | 0.169 | 21 | 5.67 | 0.104 |
| 34 | 22 | 3 | 0.48 | 0.006 | 19 | 0.63 | 0.008 | 21 | 1.11 | 0.014 |
| 35 | 22 | 3 | 0.48 | 0.006 | 20 | 0.55 | 0.009 | 21 | 1.03 | 0.015 |
| 36 | 22 | 1 | 0.65 | 0.008 | - | - | - | 21 | 0.65 | 0.008 |
| 37 | 22 | - | - | - | 1 | 0.65 | 0.008 | 21 | 0.65 | 0.008 |
| 38 | 22 | - | - | - | 2 | 0.61 | 0.008 | 21 | 0.61 | 0.008 |
| 39 | 22 | - | - | - | 3 | 0.48 | 0.006 | 21 | 0.48 | 0.006 |

| Comparative examples | 1^{st} 3-way catalyst : 21 | 1^{st} HC adsorbing/purifying catalyst : 11 | | | 2^{nd} HC absorbing/purifying catalyst : 12 | | | 2^{nd} 3-way catalyst : 22 | Total HC adsorbing/purifying catalysts | |
|---|---|---|---|---|---|---|---|---|---|---|
| | Catalyst No. | Catalyst No. | L/d (-) | L/A (-) | Catalyst No. | L/d (-) | L/A (-) | Catalyst No. | Σ(L)/Σ(d) (-) | Σ(L)/Σ(A) (-) |
| 2 | 22 | 1 | 0.65 | 0.008 | - | - | - | - | 0.65 | 0.008 |
| 2 | 22 | - | - | - | 1 | 0.65 | 0.008 | 21 | 0.65 | 0.008 |
| 3 | 22 | - | - | - | 2 | 0.61 | 0.008 | 21 | 0.61 | 0.008 |
| 4 | 22 | - | - | - | 3 | 0.48 | 0.006 | 21 | 0.48 | 0.006 |

**Table 5**

| | 1^{st} HC adsorbing/purifying catalyst : 11 | 2^{nd} HC adsorbing/purifying catalyst : 12 | | | |
|---|---|---|---|---|---|
| Examples | HC adsorption rate(%) | HC adsorption rate(%) | Total HC adsorption rate(%) | HC purification rate(%) | A-bag (mg/mile) |
| 1 | 47 | - | 47 | 12 | 17.6 |
| 2 | - | 49 | 49 | 20 | 16.0 |
| 3 | - | 65 | 65 | 30 | 15.3 |
| 4 | - | 62 | 62 | 28 | 15.7 |
| 5 | - | 60 | 60 | 25 | 16.1 |
| 6 | - | 68 | 68 | 36 | 14.5 |
| 7 | 47 | 28 | 75 | 48 | 11.6 |
| 8 | 45 | 25 | 70 | 46 | 12.2 |
| 9 | 43 | 23 | 66 | 44 | 12.7 |
| 10 | 40 | 20 | 60 | 50 | 12.6 |
| 11 | 47 | 32 | 79 | 55 | 10.3 |
| 11 | 57 | 22 | 79 | 52 | 10.7 |
| 12 | - | 79 | 79 | 49 | 10.6 |
| 13 | - | 82 | 82 | 44 | 11.1 |
| 14 | - | 84 | 84 | 58 | 9.0 |
| 15 | 47 | 28 | 75 | 58 | 9.8 |
| 16 | 57 | 28 | 85 | 58 | 8.9 |
| 17 | 57 | 29 | 86 | 61 | 8.3 |
| 18 | - | 80 | 80 | 62 | 8.8 |
| 19 | - | 83 | 83 | 55 | 9.5 |
| 20 | - | 85 | 85 | 63 | 8.2 |

**Table 6**

| | 1^{st} HC adsorbing/purifying catalyst : 11 | 2^{nd} HC adsorbing/purifying catalyst : 12 | | | |
|---|---|---|---|---|---|
| Examples | HC absorption rate(%) | HC adsorption rate(%) | Total HC adsorption rate(%) | HC purification rate(%) | A-bag (mg/mile) |
| 21 | 40 | 28 | 68 | 64 | 8.7 |
| 22 | 50 | 32 | 82 | 59 | 9.0 |
| 23 | 50 | 35 | 85 | 61 | 8.5 |
| 24 | 45 | 29 | 74 | 63 | 9.3 |
| 25 | 43 | 28 | 71 | 50 | 11.2 |
| 26 | 40 | 27 | 67 | 61 | 10.3 |
| 27 | 47 | 38 | 85 | 63 | 8.2 |
| 28 | 45 | 30 | 75 | 55 | 10.2 |
| 29 | 43 | 29 | 72 | 52 | 10.8 |
| 30 | 40 | 28 | 68 | 49 | 11.5 |
| 31 | 47 | 37 | 84 | 63 | 8.3 |
| 32 | 47 | 38 | 85 | 55 | 9.3 |
| 33 | 47 | 38 | 85 | 53 | 9.6 |
| 34 | 40 | 28 | 68 | 50 | 11.4 |
| 35 | 40 | 29 | 69 | 62 | 10.0 |
| 36 | 40 | - | 40 | 20 | 17.2 |
| 37 | - | 43 | 43 | 25 | 16.8 |
| 38 | - | 45 | 45 | 22 | 16.9 |
| 39 | - | 47 | 47 | 20 | 17.0 |

| | 1^{st} HC adsorbing/purifying catalyst : 11 | 2^{nd} HC adsorbing/purifying catalyst : 12 | | | |
|---|---|---|---|---|---|
| Comparative examples | HC adsorption rate(%) | HC adsorption rate(%) | Total HC adsorption rate(%) | HC purification rate(%) | A-bag (mg/mile) |
| 1 | 40 | - | 40 | 20 | 16.0 |
| 2 | - | 43 | 43 | 25 | 15.0 |
| 3 | - | 45 | 45 | 22 | 15.6 |
| 4 | - | 47 | 47 | 20 | 16.0 |

## Claims

1. Exhaust gas purifying system for a vehicle, comprising:
an exhaust gas passage (40),
an HC adsorbing/purifying catalyst (10) disposed in the exhaust gas passage (40), comprising a monolithic carrier (1), and a hydrocarbon adsorbent layer (2) and a purifying catalyst layer (3) formed on the monolithic carrier (1), and
a three-way catalyst(20) disposed upstream of the HC adsorbing/purifying catalyst (10) in the exhaust gas passage (40),
**characterized in that**
the monolithic carrier (1) has a sectional diameter (d) and a length (L) set in a relationship represented by 2.0 ≤ L/d ≤ 16.0.

2. Exhaust gas purifying system according to claim 1, **characterized by** at least another HC adsorbing/purifying catalyst comprising a monolithic carrier; and hydrocarbon adsorbent and purifying catalyst layers formed on the monolithic carrier, and being disposed downstream of the HC adsorbing/purifying catalyst (10) in the exhaust gas passage (40),
wherein, for all the HC adsorbing/purifying catalysts, a sum (Σd) of sectional diameters of the monolithic carriers and a sum (ΣL) of lengths of the monolithic carriers are set in a relationship represented by 0.5 ≤ (ΣL)/(Σd).

3. Exhaust gas purifying system for a vehicle, comprising:
an exhaust gas passage (40),
an HC adsorbing/purifying catalyst (10) disposed in the exhaust gas passage (40), comprising a monolithic carrier (1), and a hydrocarbon adsorbent layer (2) and a purifying catalyst layer (3) formed on the monolithic carrier (1), and
a three-way catalyst (20) disposed upstream of the HC adsorbing/purifying catalyst (10) in the exhaust gas passage (40),
**characterized in that**
the monolithic carrier (1) has a sectional area (A) and a length (L) set in a relationship represented by 0.035 ≤ L/A ≤ 0.3.

4. Exhaust gas purifying system according to claim 3, **characterized by** at least another HC adsorbing/purifying catalyst comprising a monolithic carrier, and hydrocarbon adsorbent and purifying catalyst layers formed on the monolithic carrier, and being disposed downstream of the HC adsorbing/purifying catalyst (10) in the exhaust gas passage (40),
wherein, for all the HC adsorbing/purifying catalysts, a sum (ΣA) of sectional areas of the monolithic carriers and a sum (ΣL) of lengths of the monolithic carriers are set in a relation represented by 0.05 ≤ (ΣL) / (ΣA).

5. Exhaust gas purifying system according to at least one of the preceding claims 1 to 4, **characterized in that** the three-way catalyst (20) is adapted to control an amount of adsorbed hydrocarbons of the HC adsorbing/purifying catalyst to be lower than a saturated adsorption amount.

6. Exhaust gas purifying system according to claim 5, **characterized in that** the three-way catalyst (20) is adapted to control the amount of adsorbed hydrocarbons of the HC adsorbing/purifying catalyst (10) to be lower than or equal to 70% of the saturated adsorption amount.

7. Exhaust gas purifying system according to at least one of the preceding claims 1 to 6, **characterized in that** the hydrocarbon adsorbent layer (2) contains H type β-zeolite having a Si/2AI ratio set in a range of 10 to 1000.

8. Exhaust gas purifying system according to at least one of the preceding claims 1 to 7, **characterized in that** the hydrocarbon adsorbent layer (2) contains zeolite of at least one type selected from the group consisting of MFI, a Y type zeolite, USY, mordenite, and ferrierite.

9. Exhaust gas purifying system according to at least one of the preceding claims 1 to 8, **characterized in that** the hydrocarbon adsorbent layer (2) comprises at least one selected from the group consisting of palladium, magnesium, calcium, strontium, barium, silver, yttrium, lanthanum, cerium, neodymium, phosphorus, boron and zirconium.

10. Exhaust gas purifying system according to at least one of the preceding claims 1 to 9, **characterized in that** the hydrocarbon adsorbent layer (2) comprises:
zeolite as a main component,
noble metal of at least one type selected from the group consisting of platinum, rhodium and palladium, and
zirconium oxide containing 1 to 40 mol% of metal of at least one type selected from the group consisting of cerium, neodymium, praseodymium and lanthanum, and alumina.

11. Exhaust gas purifying system according to at least one of the preceding claims 1 to 10, **characterized in that** the purifying catalyst layer(3) comprises:
noble metal of at least one type selected from the group consisting of palladium, platinum and lanthanum,
alumina containing 1 to 10 mol% of metal of at least one type selected from the group consisting of cerium, zirconium and lanthanum, and
cerium oxide containing 1 to 50 mol% of metal of one type selected from the group consisting of zirconium, neodymium, praseodymium and lanthanum.

12. Exhaust gas purifying system according to claim 11, **characterized in that** the purifying catalyst layer (3) further comprises zirconium oxide containing 1 to 40 mol% of metal of at least one selected from cerium and lanthanum.

13. Exhaust gas purifying system according to at least one of the preceding claims 1 to 12, **characterized in that** the purifying catalyst layer (3) comprises noble metal of at least one type selected from the group consisting of palladium, platinum and rhodium, and at least one selected from alkaline metal and alkaline earth metal.

## Patentansprüche

1. Abgasreinigungssystem für ein Fahrzeug, aufweisend:
einen Abgaskanal (40),
einen HC- adsorbierenden / reinigenden Katalysator (10), angeordnet in dem Abgaskanal (40), mit einem monolithischen Träger (1) und einer Kohlenwasserstoffadsorbierenden Schicht (2) und einer reinigenden Katalysatorschicht (3), gebildet auf dem monolithischen Träger, und
einen Dreiwege- Katalysator (20), angeordnet stromauf des HC- adsorbierenden / reinigenden Katalysators (10) in dem Abgaskanal (40),
**dadurch gekennzeichnet, dass**
der monolithische Träger (1) einen Querschnittsdurchmesser (d) und eine Länge (L) hat, festgelegt in einer Bezeichnung, gegeben durch 2,0 ≤ L/d ≤ 16,0.

2. Abgasreinigungssystem nach Anspruch 1, **gekennzeichnet durch** zumindest einen weiteren HC- adsorbierenden / reinigenden Katalysator mit einem monolithischen Träger und Kohlenwasserstoff- adsorbierenden und reinigenden Katalysatorschichten, gebildet auf dem monolithischen Träger, und stromab des HC- adsorbierenden / reinigenden Katalysators (10) in dem Abgaskanal (40) angeordnet, wobei für alle HC- adsorbierenden / reinigenden Katalysatoren eine Summe (Σd) der Querschnittsdurchmesser der monolithischen Träger und eine Summe (ΣL) der Längen der monolithischen Träger festgelegt sind, in eine Beziehung, repräsentiert **durch** 0,5 ≤ (ΣL) /(Σd).

3. Abgasreinigungssystem für ein Fahrzeug, aufweisend:
einen Abgaskanal (40),
einen HC- adsorbierenden / reinigenden Katalysator (10), angeordnet in dem Abgaskanal (40), mit einem monolithischen Träger (1) und einer Kohlenwasserstoffadsorbierenden Schicht (2) und einer reinigenden Katalysatorschicht (3), gebildet auf dem monolithischen Träger (1), und
einen Dreiwege- Katalysator (20), angeordnet stromauf des HC- adsorbierenden / reinigenden Katalysators (10) in dem Abgaskanal (40),
**dadurch gekennzeichnet, dass**
der monolithische Träger (1) eine Querschnittsfläche (A) und eine Länge (L) hat, festlegt in einer Beziehung, repräsentiert durch 0,035 ≤ L/A ≤ 0,3.

4. Abgasreinigungssystem nach Anspruch 3, **gekennzeichnet durch** zumindest einen weiteren HC- adsorbierenden / reinigenden Katalysator mit einem monolithischen Träger und Kohlenwasserstoff adsorbierenden und reinigenden Katalysatorschichten, gebildet auf dem monolithischen Träger und stromab des HC- adsorbierenden / reinigenden Katalysators (10)in dem Abgaskanal (40) angeordnet, wobei für alle der HC- adsorbierenden / reinigenden Katalysatoren eine Summe (ΣA) der Querschnittsflächen der monolithischen Träger und eine Summe (ΣL) der Längen der monolithischen Träger in eine Beziehung festgelegt ist, repräsentiert **durch** 0,05 ≤ (ΣL)/ (ΣA).

5. Abgasreinigungssystem nach zumindest einem der vorhergehenden Ansprüche 1 bis 4, **dadurch gekennzeichnet, dass** der Dreiwege- Katalysator (20) vorgesehen ist, eine Menge von adsorbierenden Kohlenwasserstoffen des HC- adsorbierenden / reinigenden Katalysators zu steuern, um niedriger als eine gesättigte Adsorptionsmenge zu sein.

6. Abgasreinigungssystem nach Anspruch 5, **dadurch gekennzeichnet, dass** der Dreiwege- Katalysator (20) vorgesehen ist, die Menge der adsorbierenden Kohlenwasserstoffe des HC- adsorbierenden / reinigenden Katalysators (10) zu steuern, um niedriger oder gleich zu 70% der gesättigten Adsorptionsmenge zu sein.

7. Abgasreinigungssystem nach zumindest einem der vorhergehenden Ansprüche 1 bis 6, **dadurch gekennzeichnet, dass** die die Kohlenwasserstoff- adsorbierende Schicht (2) H- Typ β- Zeolit mit einem Si/2Al- Verhältnis, festgelegt in einem Bereich von 10 bis 1000, enthält.

8. Abgasreinigungssystem nach zumindest einem der vorhergehenden Ansprüche 1 bis 7, **dadurch gekennzeichnet, dass** die die Kohlenwasserstoff- adsorbierende Schicht (2) Zeolit von zumindest einem Typ enthält, ausgewählt aus einer Gruppe, die aus MFI, einen Y- Typ- Zeolit, USY, Mordenit und Ferrit enthält.

9. Abgasreinigungssystem nach zumindest einem der vorhergehenden Ansprüche 1 bis 8, **dadurch gekennzeichnet, dass** die die Kohlenwasserstoff- adsorbierende Schicht (2) zumindest eines enthält, ausgewählt aus der Gruppe, enthaltend aus Palladium, Magnesium, Calcium, Strontium, Barium, Silber, Yttrium. Lanthan, Zer, Neodym, Phosphor, Bor oder Zirkonium.

10. Abgasreinigungssystem nach zumindest einem der vorhergehenden Ansprüche 1 bis 9, **dadurch gekennzeichnet, dass** die Kohlenwasserstoff- adsorbierende Schicht (2) aufweist:
Zeolit als eine Hauptkomponente,
Edelmetall von zumindest einem Typ, ausgewählt aus der Gruppe, bestehend aus Platin, Rhodium und Palladium, und
Zirkoniumoxid, das 1 bis 40 Mol-% von Metall von zumindest einem Typ enthält, ausgewählt aus der Gruppe, die aus Zer, Neodym, Praseodym und Lanthan und Aluminium besteht.

11. Abgasreinigungssystem nach zumindest einem der vorhergehenden Ansprüche 1 bis 10, **dadurch gekennzeichnet, dass** die Kohlenwasserstoff- reinigende Schicht (3) aufweist:
Edelmetall von zumindest einem Typ, ausgewählt aus der Gruppe, bestehend aus Palladium, Platin und Lanthan,
Aluminium, das 1 bis 10 Mol-% aus Metall von zumindest einem Typ, ausgewählt aus der Gruppe, die aus Zer, Zirkonium oder Lanthan besteht, und
Zeroxid, das 1 bis 50 Mol-% aus Metall von einem Typ enthält, ausgewählt aus der Gruppe, die aus Zirkonium, Neodym, Praseodym und Lanthan besteht.

12. Abgasreinigungssystem nach Anspruch 11, **dadurch gekennzeichnet, dass** die reinigende, Katalysatorschicht (3) außerdem Zirkoniumoxid aufweist, das 1 bis 40 Mol-% aus Metall von zumindest ein ausgewähltes von Zer oder Lanthan enthält.

13. Abgasreinigungssystem nach zumindest einem der vorhergehenden Ansprüche 1 bis 12, **dadurch gekennzeichnet, dass** die reinigende Katalysatorschicht (3) Edelmetall von einem Typ aufweist, ausgewählt aus der Gruppe, die aus Palladium, Platin und Rhodium und zumindest einem enthält, ausgewähltes aus alkalischem Metall oder alkalischem Erdmetall.

## Revendications

1. Système de purification de gaz d'échappement pour un véhicule, comprenant :
un passage de gaz d'échappement (40),
un catalyseur adsorbant/purifiant les HC (10) disposé dans le passage de gaz d'échappement (40), comprenant un support monolithique (1), et une couche d'adsorbant des hydrocarbures (2) et une couche de catalyseur purifiant (3) formées sur le support monolithique (1), et
un catalyseur trifonctionnel (20) disposé en amont du catalyseur adsorbant/purifiant les HC (10) dans le passage de gaz d'échappement (40), **caractérisé en ce que**
le support monolithique (1) a un diamètre de section (d) et une longueur (L) déterminés selon une relation représentée par 2,0 ≤ L/d ≤ 16,0.

2. Système de purification de gaz d'échappement selon la revendication 1, **caractérisé par** au moins un autre catalyseur adsorbant/purifiant les HC comprenant un support monolithique, et des couches d'adsorbant des hydrocarbures et de catalyseur purifiant formées sur le support monolithique, et étant disposé en aval du catalyseur adsorbant/purifiant les HC (10) dans le passage de gaz d'échappement (40), dans lequel, pour tous les catalyseurs adsorbant/purifiant les HC, une somme (Σd) des diamètres en coupe des supports monolithiques et une somme (ΣL) des longueurs des supports monolithiques sont déterminées selon une relation représentée par 0,5 ≤ (ΣL)/(Σd).

3. Système de purification de gaz d'échappement pour un véhicule, comprenant :
un passage de gaz d'échappement (40),
un catalyseur adsorbant/purifiant les HC (10) disposé dans le passage de gaz d'échappement (40), comprenant un support monolithique (1), et une couche d'adsorbant des hydrocarbures (2) et une couche de catalyseur purifiant (3) formées sur le support monolithique (1), et
un catalyseur trifonctionnel (20) disposé en amont du catalyseur adsorbant/purifiant les HC (10) dans le passage de gaz d'échappement (40), **caractérisé en ce que**
le support monolithique (1) a une aire de section (A) et une longueur (L) déterminées selon une relation représentée par 0,035 ≤ L/A ≤ 0,3.

4. Système de purification de gaz d'échappement selon la revendication 3, **caractérisé par** au moins un autre catalyseur adsorbant/purifiant les HC comprenant un support monolithique, et des couches d'adsorbant des hydrocarbures et de catalyseur purifiant formées sur le support monolithique, et étant disposé en aval du catalyseur adsorbant/purifiant les HC (10) dans le passage de gaz d'échappement (40),
dans lequel, pour tous les catalyseurs adsorbant/purifiant les HC, une somme (ΣA) des aires de section des supports monolithiques et une somme (ΣL) des longueurs des supports monolithiques sont déterminées selon une relation représentée par 0,05 ≤ (ΣL) / (ΣA).

5. Système de purification de gaz d'échappement selon au moins l'une quelconque des revendications précédentes 1 à 4, **caractérisé en ce que** le catalyseur trifonctionnel (20) est conçu pour contrôler une quantité d'hydrocarbures adsorbés du catalyseur adsorbant/purifiant les HC de manière qu'elle soit inférieure à une quantité d'adsorption saturée.

6. Système de purification de gaz d'échappement selon la revendication 5, **caractérisé en ce que** le catalyseur trifonctionnel (20) est conçu pour contrôler la quantité d'hydrocarbures adsorbés du catalyseur adsorbant/purifiant les HC (10) de manière qu'elle soit inférieure ou égale à 70% de la quantité d'adsorption saturée.

7. Système de purification de gaz d'échappement selon au moins l'une quelconque des revendications précédentes 1 à 6, **caractérisé en ce que** la couche d'adsorbant des hydrocarbures (2) contient une β-zéolithe de type H ayant un rapport Si/2Al déterminé dans une gamme de 10 à 1 000.

8. Système de purification de gaz d'échappement selon au moins l'une quelconque des revendications précédentes 1 à 7, **caractérisé en ce que** la couche d'adsorbant des hydrocarbures (2) contient une zéolithe d'au moins un type choisi dans le groupe constitué par les MFI, une zéolithe de type Y, les USY, la mordénite et la ferriérite.

9. Système de purification de gaz d'échappement selon au moins l'une quelconque des revendications précédentes 1 à 8, **caractérisé en ce que** la couche d'adsorbant des hydrocarbures (2) comprend au moins un élément choisi dans le groupe constitué par le palladium, le magnésium, le calcium, le strontium, le baryum, l'argent, l'yttrium, le lanthane, le cérium, le néodyme, le phosphore, le bore et le zirconium.

10. Système de purification de gaz d'échappement selon au moins l'une quelconque des revendications précédentes 1 à 9, **caractérisé en ce que** la couche d'adsorbant des hydrocarbures (2) comprend :
une zéolithe en tant que principal constituant,
un métal noble d'au moins un type choisi dans le groupe constitué par le platine, le rhodium et le palladium, et
un oxyde de zirconium contenant 1 à 40% en moles de métal d'au moins un type choisi dans le groupe constitué par le cérium, le néodyme, le praséodyme et le lanthane, et de l'alumine.

11. Système de purification de gaz d'échappement selon au moins l'une quelconque des revendications précédentes 1 à 10, **caractérisé en ce que** la couche de catalyseur purifiant (3) comprend :
un métal noble d'au moins un type choisi dans le groupe constitué par le palladium, le platine et le lanthane,
une alumine contenant 1 à 10% en moles de métal d'au moins un type choisi dans le groupe constitué par le cérium, le zirconium et le lanthane, et
un oxyde de cérium contenant 1 à 50% en moles de métal d'un type choisi dans le groupe constitué par le zirconium, le néodyme, le praséodyme et le lanthane.

12. Système de purification de gaz d'échappement selon la revendication 11, **caractérisé en ce que** la couche de catalyseur purifiant (3) comprend en outre un oxyde de zirconium contenant 1 à 40% en moles de métal d'au moins un élément choisi parmi le cérium et le lanthane.

13. Système de purification de gaz d'échappement selon au moins l'une quelconque des revendications précédentes 1 à 12, **caractérisé en ce que** la couche de catalyseur purifiant (3) comprend un métal noble d'au moins un type choisi dans le groupe constitué par le palladium, le platine et le rhodium, et au moins un élément choisi parmi les métaux alcalins et les métaux alcalino-terreux.
